# EUROPÄISCHE PATENTANMELDUNG

(11) **EP 0 529 242 A1**
(43) Veröffentlichungstag der Anmeldung: **03.03.1993**
(21) Anmeldenummer: 92111257.9
(22) Anmeldetag: 02.07.1992
(51) Int. Cl.: B65G 15/32, G09F 21/00

(54) **Förderband mit verschleissfester Kennzeichnung**

(30) Priorität: 29.08.1991 DE 4128664
(71) Anmelder: PROMOTEX WERBETECHNIK GmbH, D-40885 Ratingen (DE)
(72) Erfinder: Bierbaum, Heinz J., W-4408 Dülmen (DE)
(74) Vertreter: Habbel, Hans-Georg, Dipl.-Ing.

(57) **Zusammenfassung**

Bei mit optischen Kennzeichnungen versehenen Förderbändern (1), bei denen die Kennzeichnung in das Förderband (1) vertieft eingeschweißt ist, schlägt die Erfindung vor, ein einschichtiges Förderband über seine gesamte Dicke bzw. ein mehrschichtiges Förderband (1) über die Gesamtdicke von einer oder mehreren oberen Schichten (3) entsprechend den Konturen der Kennzeichnung durchzuschneiden, wobei die Ausschnitte (5) durch optisch unterschiedliches Füllmaterial (7) ausgefüllt werden. Auf diese Weise wird ein Förderband geschaffen, bei dem die Lebensdauer der Kennzeichnung der Lebensdauer des gesamten Förderbandes entspricht und bei dem filigrane konturenscharfe Kennzeichnungen, beispielsweise zu Werbezwecken möglich sind.

## Beschreibung

Die Erfindung betrifft ein Förderband nach dem Oberbegriff des Anspruches 1 oder 2. Ein derartiges Förderband ist aus dem DE-GM 18 28 372 bekannt. Bei diesem Förderband werden Markierungsstreifen in die Oberfläche des Förderbandes geschweißt, ohne den Kern des Förderbandes zu durchtrennen.

Dabei ergeben sich nicht zwangsläufig scharfe Konturen der Markierungen, so daß die Anbringung von einfachen Markierungen zwar möglich ist, die Konturierung den Ansprüchen, die beispielsweise an eine Werbekennzeichnung gestellt werden, jedoch nicht entsprechen kann. Zudem kann die Lebensdauer der Markierungen aufgrund des Verschleisses der Oberfläche und der Markierungstiefe geringer sein als die Lebensdauer des gesamten Förderbandes, so daß die Markierungen ggf. nicht mehr erkennbar sind, während sich das Förderband noch im Betrieb befindet.

Der Erfindung liegt die Aufgabe zugrunde, ein mit optischen Kennzeichnungen ausgerüstetes Förderband zu schaffen, bei dem die Lebensdauer der Kennzeichnung der Lebensdauer des gesamten Fördergurtes entspricht und bei dem die Konturierung der Kennzeichnung scharfrandig ist.

Diese Aufgabe wird durch eine Ausbildung gemäß den Merkmalen nach Anspruch 1 oder Anspruch 2 gelöst.

Die Erfindung schlägt mit anderen Worten vor, die obere Schicht bzw. obere Schichten des Förderbandes, die die Lebensdauer des Bandes bestimmen, komplett zu durchschneiden und die Ausnehmungen mit Füllmaterial zu ergänzen. Bei einem einschichtigen Förderband bedeutet dies, daß das Band in seiner kompletten Dicke durchschnitten wird und daß Ausschnitte hergestellt werden, in die anschließend optisch unterschiedliches, beispielsweise andersfarbiges Füllmaterial eingesetzt wird, welches mit dem umgebenden Grundmaterial des Förderbandes verschweißt wird.

Insbesondere bei stark beanspruchten Fördergurten aus elastomerem Material, beispielsweise bei Kassenbändern, hat sich herausgestellt, daß die so hergestellten Markierungen den Beanspruchungen gewachsen sind, die durch die Umlenkung des Gurtes um kleine Radien und durch die Oberflächenbeanspruchung auftreten. Dadurch, daß die Gurte komplett durchschnitten werden, können äußerst konturenscharfe Kennzeichnungen hergestellt werden, so daß filigrane Graphiken, Schriftzüge od. dgl. zu Werbezwecken als Kennzeichnung verwendet werden können.

Bei Fördergurten, wie beispielsweise Kassenlaufbändern, wird häufig mehrschichtiges Gurtmaterial verwendet werden, beispielsweise mit Hilfe von Gewebeeinlagen. Der Verschleiß der Oberflächenschicht bestimmt die Lebensdauer des gesamten Fördergurtes, da bei Abnutzung dieser Oberflächenschicht der Fördergurt ausgewechselt wird. Erfindungsgemäß kann die Oberflächenschicht und auch ggf. darunter vorgesehene Gewebelagen wie ein einschichtiges Förderband komplett durchschnitten werden, wobei die hergestellten Ausnehmungen durch Füllmaterial anderer optischer Beschaffenheit, beispielsweise anderer Farbe, ausgefüllt werden.

Dieser so hergestellte gekennzeichnete obere Teil eines Fördergurtes weist die gleiche Lebensdauer auf wie ein oberer Teil ohne Kennzeichnung, so daß nach Aufbringen dieses gekennzeichneten oberen Teils auf einen Trägergurt ein Förderband üblicher und herkömmlicher Lebensdauer geschaffen wird. Die Kennzeichnung kann hier die beschriebene Konturenschärfe aufweisen und weist die gleiche Lebensdauer auf wie der gesamte übrige obere Teil.

Alternativ zu Fördergurten aus elastomeren Werkstoffen können die Förderbänder auch als Schuppenbänder ausgebildet sein, wie sie beispielsweise aus den Gepäckbändern in Flughafengebäuden bekannt sind. Bei derartigen Schuppenbändern können die Einzelglieder entweder einschichtig aus einem geeigneten Kunststoff bestehen. Alternativ dazu können die Einzelglieder aus einer Trägerplatte bestehen, auf der eine Oberflächenschicht, beispielsweise aus Kunststoff aufgebracht ist.

Erfindungsgemäß werden analog zu den Fördergurten die Einzelglieder von Schuppenbändern komplett durchschnitten, wenn es sich um einschichtige Einzelglieder handelt. Dabei können die Ausnehmungen anschließend mit gleichartigem, jedoch andersfarbigen Füllmaterial ausgefüllt werden. Bei der Herstellung von zweischichtigen Einzelgliedern dagegen wird die obere Schicht in der beschriebenen Weise entsprechend den Konturen der gewünschten Kennzeichnung ausgeschnitten und mit Füllmaterial aufgefüllt. Anschließend wird diese Oberflächenschicht dann auf die Trägerplatte aufgebracht.

In allen beschriebenen Fällen ist die Konturierung der Kennzeichnung gegenüber den bislang verwendeten Verfahren, die einer Gravur ähnlich waren, erheblich konturenschärfer. Als gleichzeitiger Vorteil entspricht die Lebensdauer der Kennzeichnung der Lebensdauer des gesamten Förderbandes, da der verschleißbestimmende Teilbereich des Förderbandes über seine gesamte Dicke die Kennzeichnung aufweist.

Besonders vorteilhaft können filigrane Kennzeichnungen konturenscharf dadurch hergestellt werden, daß die Förderbänder bzw. die in Frage kommenden Bandschichten mit Hilfe eines Wasserstrahlschneiders durchschnitten werden. Insbesondere wenn der Wasserstrahl senkrecht zur Oberfläche des Materials geführt wird, ist eine saubere und konturenscharfe Abgrenzung unterschiedlicher Farben möglich.

Vorteilhaft entspricht das eingebrachte Füllmaterial in seiner Zusammensetzung bis auf die Farbe dem im übrigen Förderband verwendeten Material. Auf diese Weise wird ein gleichmäßiges Verhalten des Förderbandes bezüglich Elastizität, Verschleiß, thermische Ausdehnung u. dgl. erzielt. So weist das gesamte Förderband die gleiche Lebensdauer wie ein nicht gekennzeichnetes Förderband auf und weiterhin entspricht die Lebensdauer der Kennzeichnung der Lebensdauer des übrigen Bandmaterials.

Gegebenenfalls kann auf das Förderband eine transparente Oberflächenbeschichtung aufgebracht werden, die die Erkennbarkeit der Kennzeichnung nicht beeinträchtigt und die beispielsweise als zusätzliche Verschleißschicht vorgesehen sein kann.

Die Erfindung wird nachfolgend anhand mehrerer Ausführungsbeispiele im einzelnen näher erläutert. Dabei zeigt
- Fig. 1: ein Förderband, welches als elastomehrer Fördergurt mit mehreren Schichten ausgebildet ist,
- Fig. 2: ein Förderband, welches als einschichtiger elastomerer Fördergurt ausgebildet ist und
- Fig. 3: ein Förderband, welches als Schuppenband mit einer Vielzahl von Einzelgliedern ausgebildet ist.

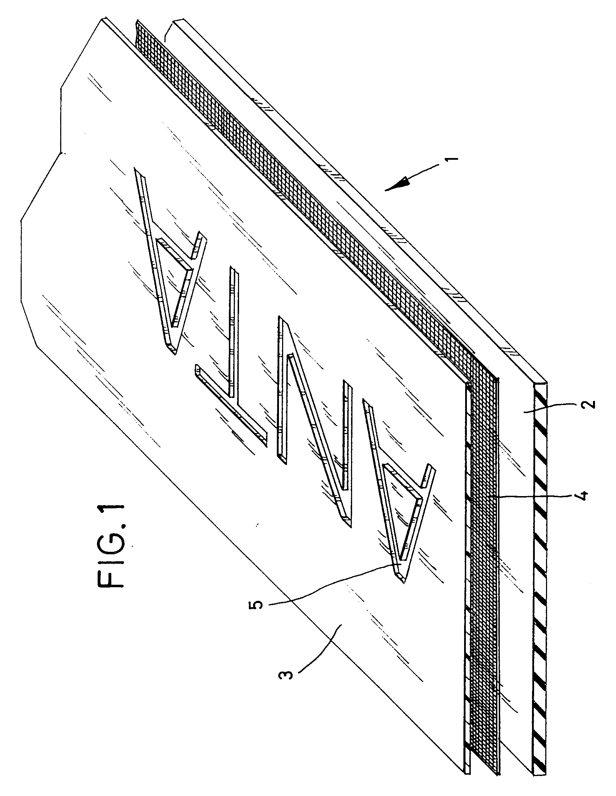

In Fig. 1 ist ein Förderband 1 dargestellt, welches als mehrschichtiger elastomerer Fördergurt ausgebildet ist. Der Fördergurt 1 besteht aus einem Trägergurt 2, einer oberen Schicht 3 und einer Gewebelage 4 in der Mitte. Die einzelnen Schichten werden aufgeklebt oder aufgeschweißt, wobei entweder nur die obere Schicht 3 oder auch die Gewebelage 4 die Kennzeichnungen aufweisen.

Zu diesem Zweck weist die obere Schicht 3 Ausnehmungen 5 auf, die mit Hilfe eines Wasserstrahlschneiders hergestellt worden sind. In die Ausnehmungen 5 können entsprechende Einsatzstücke als Füllmaterial eingesetzt werden, wobei diese Einsatzstücke vorteilhaft aus einem technisch gleichartigem, jedoch andersfarbigen Gurtmaterial ausgeschnitten worden sind.

Die Einsatzstücke können beispielsweise durch eine andere Oberflächengestaltung oder auf andere Weise eine unterschiedliche optische Eigenschaft gegenüber dem übrigen Material der Schicht 3 aufweisen. Vorteilhaft jedoch wird andersfarbiges Material als Füllmaterial in die Ausnehmungen 5 eingebracht, so daß beispielsweise mehrfarbige Kennzeichnungen möglich sind, die beispielsweise Firmenlogos od. dgl. wiedergeben.

Alternativ dazu kann zunächst die obere Schicht 3 mit der Gewebelage 4 verbunden werden, so daß anschließend gemeinsam in die Schicht 3 und die Gewebelage 4 die Konturen der Ausnehmungen 5 eingeschnitten werden.

Vorteilhaft wird zunächst der obere Teil des Fördergurtes 1 hergestellt, indem das Füllmaterial in die Ausnehmungen 5 eingesetzt und mit der übrigen Schicht 3 (bzw. der oberen Schicht 3 und der Gewebelage 4) verschweißt wird. Es kann jedoch auch zunächst der obere Teil auf den Trägergurt 2 aufgebracht, anschließend das Füllmaterial in die Ausnehmungen 5 eingesetzt und schließlich der gesamte Gurt miteinander verklebt oder verschweißt werden.

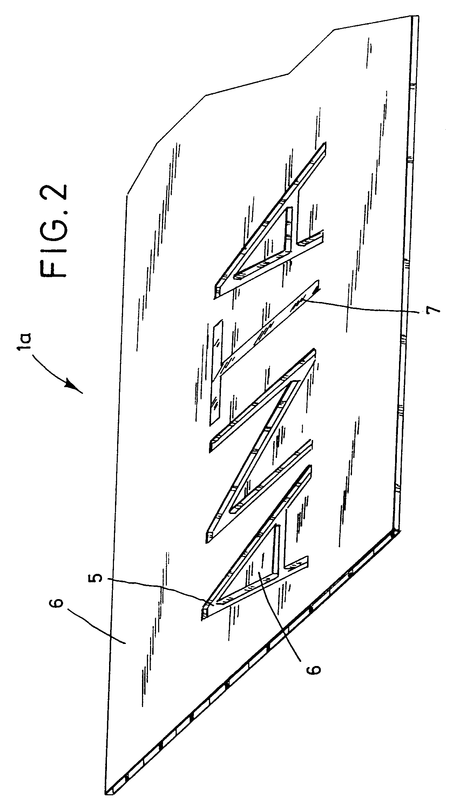

In Fig. 2 ist ein Fördergurt 1a aus im wesentlichen elastomerem Werkstoff dargestellt, wobei der Fördergurt 1a grundsätzlich aus einem Gurtmaterial 6 besteht. Das Gurtmaterial 1 kann einschichtig oder auch mehrlagig aufgebaut sein. In das Gurtmaterial 6 sind Ausnehmungen 5 mit Hilfe eines Wasserstrahlschneiders eingeschnitten, wobei das Gurtmaterial 6 über seine gesamte Dicke durchschnitten ist.

In die Ausnehmungen 5 werden als Füllmaterial Einsatzstücke 7 eingesetzt, die ebenfalls mit einem Wasserstrahlschneider ausgeschnitten wurden, jedoch aus einem Gurtmaterial mit einer anderen Einfärbung als bei dem Gurtmaterial 6.

Die Verbindung zwischen den Einsatzstücken 7 und dem Gurtmaterial 6 kann durch Verkleben, vorzugsweise aber durch Verschweißen, z. B. mit Hilfe einer thermischen oder einer Ultraschallverschweißung erfolgen. Überraschend hat sich dabei gezeigt, daß trotz der Gurtunterbrechung infolge der Ausnehmungen 5 und der eingesetzten Einsatzstücke 7 eine hervorragende Standfestigkeit des Fördergurtes 1a nach wie vor gegeben ist, obwohl der Fördergurt 1a über seine gesamte Dicke durchschnitten ist. Es muß also kein zusätzlicher und ununterbrochener Trägergurt vorhanden sein.

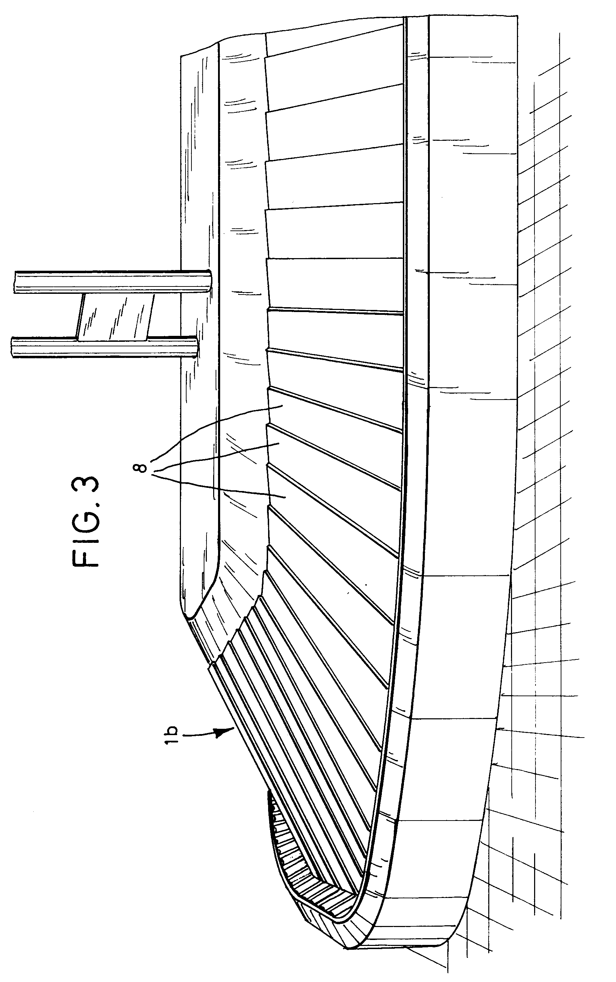

In Fig. 3 ist ein Förderband dargestellt, welches als Schuppenband 1b mit einer Vielzahl von Einzelgliedern 8 ausgebildet ist. Die Einzelglieder 8 sind üblicherweise starre Platten im Gegensatz zu den Fördergurten, die in den Fig. 1 und 2 dargestellt sind. Derartige und ähnliche Förderbänder dienen beispielsweise als Gepäckbänder.

Die Einzelglieder 8 können analog zum in Fig. 1 dargestellten Aufbau ebenfalls mehrschichtig aufgebaut sein und beispielsweise eine metallische Trägerplatte und eine obere Kunststoffbeschichtung aufweisen. In diesem Fall wird ebenfalls analog zu dem Fördergurt 1 aus Fig. 1 die obere Kunststoffschicht mit Ausnehmungen und den entsprechenden Kennzeichnungen versehen und anschließend auf die Trägerplatte aufgebracht.

Alternativ dazu kann analog zu dem Fördergurt 1a aus Fig. 2 ein Einzelglied 8 aus einer einschichtigen Platte, beispielsweise einem entsprechend schlagfesten Kunststoff, bestehen. In diesem Fall kann ebenfalls analog zu dem Aufbau des Fördergurtes 1a in Fig. 2 die Platte des Einzelgliedes 8 über ihre gesamte Dicke durchschnitten werden, so daß Ausnehmungen hergestellt werden, in die das Füllmaterial für die Kennzeichnung eingebracht wird.

Auch bei den Schuppenbändern 1b wird das Füllmaterial der Kennzeichnungen vorteilhaft aus dem gleichen, lediglich andersfarbigem Werkstoff bestehen wie das umgebende Bandmaterial.

## Patentansprüche

1. Mit einer optischen Kennzeichnung versehenes Förderband, dessen Kennzeichnung in das Förderband vertieft eingeschweißt ist, dadurch gekennzeichnet, daß das Förderband (Fördergurt 1, 1a; Schuppenband 1b) über seine gesamte Dicke entsprechend den Konturen der Kennzeichnung durchschnitten ist, wobei die Ausschnitte (Ausnehmungen 5) durch optisch unterschiedliches Füllmaterial (Einsatzstücke 7) ausgefüllt sind.

2. Mit einer optischen Kennzeichnung versehenes Förderband, dessen Kennzeichnung in das Förderband vertieft eingeschweißt ist, dadurch gekennzeichnet, daß eine oder mehrere der oberen Schichten des Förderbandes (Fördergurt 1; Schuppenband 1b) entsprechend den Konturen der Kennzeichnung durchschnitten sind, wobei die Ausschnitte (Ausnehmungen 5) durch optisch unterschiedliches Füllmaterial (Einsatzstücke 7) ausgefüllt sind.

3. Förderband nach Anspruch 1 oder 2, dadurch gekennzeichnet, daß die Konturen der Kennzeichnung mit Hilfe eines Wasserstrahlschneiders hergestellt sind.

4. Förderband nach einem der Ansprüche 1 bis 3, dadurch gekennzeichnet, daß das Füllmaterial (Einsatzstücke 7) mit dem Material des übrigen Bandes bzw. der übrigen Bandschicht bis auf die Farbgebung gleich ist.

5. Förderband nach einem der Ansprüche 1 bis 4, dadurch gekennzeichnet, daß es als umlaufend geführter und angetriebener Gurt (1, 1a) aus elastomeren Werkstoffen ausgebildet ist.

6. Förderband nach einem der Ansprüche 1 bis 4, dadurch gekennzeichnet, daß es als Schuppenband (1b) mit einer Vielzahl von Einzelgliedern (8) ausgebildet ist.

7. Förderband nach einem der Ansprüche 1 bis 6, gekennzeichnet durch eine transparente Oberflächenbeschichtung.
